(19) Europäisches Patentamt
European Patent Office
Office européen des brevets

(11) **EP 4 447 006 A1**

(12) **EUROPEAN PATENT APPLICATION**
published in accordance with Art. 153(4) EPC

(43) Date of publication:
**16.10.2024 Bulletin 2024/42**

(51) International Patent Classification (IPC):
***G06V 20/62*** *(2022.01)*

(21) Application number: **22918373.6**

(86) International application number:
**PCT/CN2022/138914**

(22) Date of filing: **14.12.2022**

(87) International publication number:
**WO 2023/130925 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2022 CN 202210023481**

(71) Applicant: **BEIJING YOUZHUJU NETWORK TECHNOLOGY CO. LTD.**
**Beijing 101299 (CN)**

(72) Inventors:
• **YE, Yongjie**
  **Beijing 100086 (CN)**
• **HUANG, Can**
  **Beijing 100086 (CN)**

(74) Representative: **Dentons UK and Middle East LLP**
**One Fleet Place**
**London EC4M 7WS (GB)**

(54) **FONT RECOGNITION METHOD AND APPARATUS, READABLE MEDIUM, AND ELECTRONIC DEVICE**

(57)  The present disclosure relates to a font recognition method, device, readable medium and electronic equipment. The font recognition method divides the image to be recognized into a plurality of sub-images through the predetermined font recognition model, and obtains the first image corresponding to each sub-image. Image features, determine the second image features corresponding to the image to be recognized based on the first image features corresponding to each sub-image of the image to be recognized, the second image features include each sub-image of the image to be recognized and the context-related features of other sub-images are used to determine the font type corresponding to the target text based on the second image features. In this way, the image to be recognized can be described more comprehensively and accurately based on the correlation between each word image and other sub-images. This can effectively improve the accuracy of font recognition results and also effectively improve the font recognition rate.

```
┌────────────────────────────────────────────────────────┐
│  OBTAIN AN IMAGE TO BE RECOGNIZED, THE IMAGE TO BE       │  101
│  RECOGNIZED COMPRISING TARGET TEXT                       │
└────────────────────────────────────────────────────────┘
                          │
                          ▼
┌────────────────────────────────────────────────────────┐
│  INPUT THE IMAGE TO BE RECOGNIZED INTO A PREDETERMINED    │
│  FONT RECOGNITION MODEL, TO CAUSE THE PREDETERMINED FONT  │  102
│  RECOGNITION MODEL TO OUTPUT A FONT TYPE CORRESPONDING    │
│  TO THE TARGET TEXT                                       │
└────────────────────────────────────────────────────────┘
```

FIG. 1

## Description

## CROSS REFERENCE

This application claims priority to the Chinese patent application submitted on January 10, 2022, with the application number 202210023481.2 and the invention name "Font Recognition Method, Apparatus Readable Medium and Electronic Device". The entire content of this application is incorporated by reference incorporated in this application.

## FIELD

The present disclosure relates to the field of computer vision processing, and specifically, to a font recognition method, apparatus, readable medium and electronic device.

## BACKGROUND

In the font recognition process, due to the wide variety of fonts (there are more than 12,000 fonts for Chinese characters alone) and each font itself has multiple features, multiple features of the same font may not be reflected in one character. Therefore, the same or different features will be reflected in different characters, and the features expressed by different fonts on the same character may also have many same or similar features, which will make the recognition of fonts more difficult. Font recognition methods in related technologies usually have problems such as low font recognition rate and poor accuracy of font recognition results.

## SUMMARY

This summary section is provided to introduce in brief the idea that are described in detail in the detailed description section that follows. This summary section is not intended to identify key feature or essential feature of the claimed technical solution, nor is it intended to be used to limit the scope of the claimed technical solution.

The present disclosure provides a font recognition method, apparatus, readable medium and electronic device.

In a first aspect, the present disclosure provides a font recognition method, which comprises:

> obtaining an image to be recognized, the image to be recognized comprising target text;
> inputting the image to be recognized into a predetermined font recognition model, to cause the predetermined font recognition model to output the font type corresponding to target text;

Wherein, the predetermined font recognition model is used to: divide the image to be recognized into a plurality of sub-images; obtain the first image feature corresponding to each of sub-images, according to each sub-image of the image to be recognized; determine a second image feature corresponding to the image to be recognized according to a first image feature corresponding to each of the sub-images of an image to be recognized, the second image feature comprising a context association feature between each of sub-images and other sub-image of an image to be recognized; and determine a font type corresponding to target text according to a second image feature.

In a second aspect, the present disclosure provides a font recognition device, which comprises:

> an obtaining module, configured to obtain an image to be recognized, where the image to be recognized comprising target text;
> a determination module, configured to input the image to be recognized into a predetermined font recognition model, to cause the predetermined font recognition model to output a font type corresponding to target text;

Wherein, the predetermined font recognition model is used to divide the image to be recognized into a plurality of sub-images; obtain a first image feature corresponding to each of sub-images; determine a second image feature corresponding to an image to be recognized according to a first image feature corresponding to each of sub-images of an image to be recognized, a second image feature comprising context association feature between each of sub-images and other sub-image of the image to be recognized; determine a font type corresponding to target text according to a second image feature.

In a third aspect, the present disclosure provides a computer-readable medium on which a computer program is stored, wherein in response to the program being executed by a processing device, implements steps of the method described in the first aspect.

In a fourth aspect, the present disclosure provides an electronic device, comprising:

> a storage device, storing a computer program stored thereon;
> a processing device, configured to execute the computer program in the storage device to implement steps of the method described in the first aspect above.

In the above technical solution, the image to be recognized is input into a predetermined font recognition model, to cause the predetermined font recognition model to output the font type corresponding to the target text; wherein the predetermined font recognition model is used to: divide the image to be recognized into a plurality of sub-images; obtain a first image feature corresponding to each of the sub-images; determine a second image feature corresponding to the image to be recognized according to the first image feature corresponding to each of the sub-images of the image to be recognized, the second image feature comprising a context association feature between each of the sub-images and other sub-image of the image to be recognized; and determine a font type corresponding to the target text according to the second image feature. In this way, the second image feature corresponding to the image to be recognized is determined according to the first image feature corresponding to each of sub-images of the image to be recognized, and it is able to describe the image to be recognized comprehensively and more accurately according to the correlation between each word images and other sub-image, thus improving the accuracy of the font recognition results effectively and improving the font recognition rate effectively.

Other feature and advantage of the present disclosure will be detailed in the detailed description section that follows.

## BRIEF DESCRIPTION OF THE DRAWINGS

The above and other feature, advantage and aspects of various embodiments of the present disclosure will become more apparent with reference to the following DETAILED DESCRIPTION in conjunction with the accompanying drawings. Throughout the drawings, the same or similar reference numbers refer to the same or similar elements. It is to be understood that the drawings are schematic and that components and elements are not necessarily drawn to scale. In the accompanying drawings:

FIG. 1 is a flow chart of a font recognition method illustrated by an exemplary embodiment of the present disclosure;
FIG. 2 is a schematic diagram of the working principle of a predetermined font recognition model illustrated by an exemplary embodiment of the present disclosure;
FIG. 3 is a schematic diagram of the working principle of a TPA module illustrated by an exemplary embodiment of the present disclosure;
FIG. 4 is a flow chart of a model training method illustrated by an exemplary embodiment of the present disclosure;
FIG. 5 is a block diagram of a font recognition device illustrated by an exemplary embodiment of the present disclosure;
FIG. 6 is a block diagram of an electronic device illustrated by an exemplary embodiment of the present disclosure.

## DETAILED DESCRIPTION

Embodiments of the present disclosure will be described in more detail below with reference to the accompanying drawings. Although certain embodiments of the disclosure are shown in the drawings, it should be understood that the disclosure may be embodied in various forms and should not be construed as limited to the embodiments set forth herein, but rather these embodiments are provided for thoroughness and clarity to fully understand this disclosure. It should be understood that the drawings and embodiments of the present disclosure are for illustrative purposes only and are not intended to limit the scope of the present disclosure.

It should be understood that various steps described in the method implementations of the present disclosure may be executed in different orders and/or in parallel. Furthermore, method embodiments may include additional steps and/or omit performance of illustrated steps. The scope of the present disclosure is not limited in this regard.

As used herein, the term "comprise" and its variations are open-ended, ie, "including but not limited to." The term "based on" means "based at least in part on." The term "an embodiment" means "at least one embodiment"; the term "another embodiment" means "at least one additional embodiment"; the term "embodiments" means "at least some embodiments". Relevant definitions of other terms will be given in the description below.

It should be noted that concepts such as "first" and "second" mentioned in this disclosure are only used to distinguish different apparatus, modules or units, and are not used to limit the order of functions performed by these apparatus, modules or units or dependence between these apparatus, modules or units.

It should be noted that the modifications of "one" and "plurality" mentioned in this disclosure are illustrative and not restrictive. Those skilled in the art will understand that unless the context clearly indicates otherwise, it should be understood as "one or more".

The names of messages or information interacted between a plurality of apparatuses in the embodiments of the present disclosure are for illustrative purposes only and are not used to limit the scope of these messages or information.

Before introducing the detailed description of the present disclosure in detail, first, the application scenario of the present disclosure is described below. The present disclosure can be used to recognize text fonts in images and documents. Font recognition methods in related technologies during the text font recognition process generally include two categories: one category is font recognition based on hand-designed features, that is, using people's experience to manually design a feature extractor to extract the feature of each character, and use this to classify fonts. This type of method has a high chance of missing useful font information because it uses fixed hand-made feature to represent font feature. And designing high-accuracy feature descriptors generally requires careful engineering design and a large amount of field expertise. Therefore, it is usually difficult to obtain relative accurate feature descriptors, which is not conducive to obtain comprehensive and accurate font features, therefor also not conducive to improve the accuracy of the final font recognition results; the other type is font recognition based on deep learning, which uses deep neural networks to automatically extract font features and use the extracted font features to classify fonts , this type of font recognition solution based on deep learning does not break through the limitations of numerous font categories. Generally, the deep learning model trained still has the problem of low font recognition rate and poor accuracy of recognition results.

In order to solve the above technical problems, the present disclosure provides a font recognition method, apparatus, readable medium and electronic device. The font recognition method inputs the image to be recognized into a predetermined font recognition model, to cause the predetermined font recognition model to output the font type corresponding to the target text; wherein, the predetermined font recognition model is used to: divide the image to be recognized into a plurality of sub-images; and obtain the first image feature corresponding to each of the sub-image, and determine the second image feature corresponding to the image to be recognized according the first image feature corresponding to each of the sub-image of the image to be recognized. The second image feature comprises the context association feature between each of the sub-image and other sub-image of the image to be recognized. Determines the font type corresponding to the target text according to the second image feature. Since the second image feature corresponding to the image to be recognized is determined according to the first image feature corresponding to each of the sub-image of the image to be recognized, it is able to describe the image to be recognized more comprehensively and accurately according to correlation between image of each character and other sub-images. Therefore, determining the font type corresponding to the target text according to the second image feature can effectively ensure the accuracy of the font recognition results, and can also effectively improve the font recognition rate.

The technical solution of the present disclosure will be described in detail below in conjunction with specific embodiments.

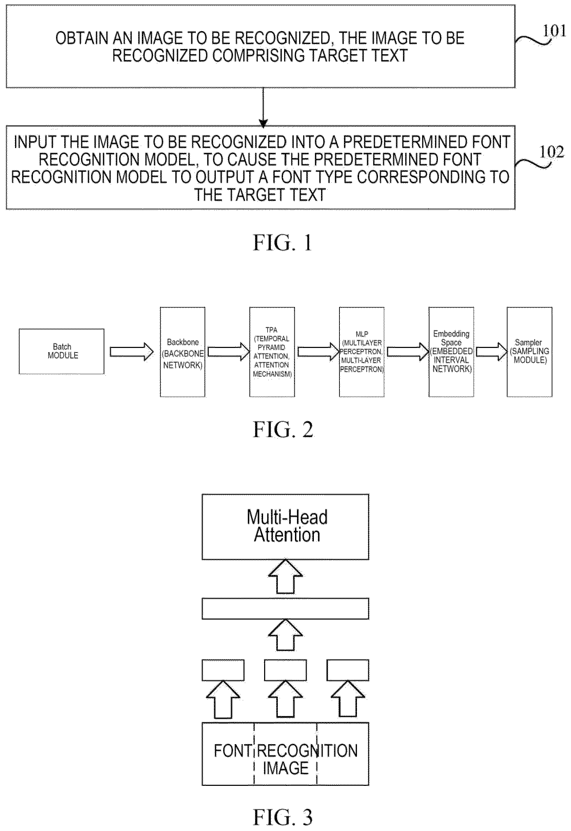

Figure 1 is a flow chart of a font recognition method illustrated by an exemplary embodiment of the present disclosure; as shown in Figure 1, the method may comprise the following steps:

Step 101: Obtain an image to be recognized, which comprises target text.

Wherein, in addition to the target text, the image to be recognized may also comprise an image background, the image background and the target text form the image to be recognized.

Step 102: Input the image to be recognized into a predetermined font recognition model, to cause the predetermined font recognition model to output the font type corresponding to the target text.

Wherein, the predetermined font recognition model is used to divide the image to be recognized into a plurality of sub-images, and obtains the first image feature corresponding to each of the sub-image, determines a second image feature corresponding to the image to be recognized according to the first image feature corresponding to each of the sub-image of the image to be recognized. The second image feature comprises contextual association feature between each of the sub-images and other sub-image of the image to be recognized, determines the font type corresponding to the target text according to the second image feature.

It should be noted that the predetermined font recognition model may comprise an image segmentation module and a multi-head attention module. The image segmentation module is used to divide the image to be recognized into a plurality of sub-images and obtains the first image feature corresponding to each of the sub-images, and inputs the first image feature corresponding to each of the sub-images into the multi-head attention module, so that the multi-head attention module obtains the context association feature between each of the sub-images and other sub-images of the image to be recognized, thereby obtaining the second image feature corresponding to the image to be recognized. Wherein, in response to the image segmentation module divides the image to be recognized into a plurality of sub-images, the image to be recognized may be divided into a plurality of sub-images according to a predetermined image segmentation rule. The image segmentation rule may divide the image into a plurality of sub-images equally according to the pixels. The image may also be divided into a plurality of sub-images with predetermined pixel ratios. Or some parts of the image may be divided into one sub-image by continuously segmenting parts with relatively similar image texture according to the image texture, thereby obtaining a plurality of sub-images. The multi-head attention module may refer to the relevant description of the multi-head attention mechanism in the prior art. Since the multi-head attention mechanism is widely used in the prior art, and the related technology is relatively easy to obtain, this disclosure does not describe it here.

For example, Figure 2 is a schematic diagram of the working principle of a predetermined font recognition model illustrated by an exemplary embodiment of the present disclosure. As shown in Figure 2, a plurality of data sets(each data set comprises a plurality of font recognition images) are first created through the Batch module , each of the data sets is used as a training data set, and then each of the obtained training data set is input into Backbone (backbone network) to obtain the image feature of each font recognition image, and then through the TPA (Temporal Pyramid Attention, Attention mechanism) performs image segmentation on the font recognition image according to the image feature to obtain the first image feature of each of the sub-images after division, and splices the first image feature of the segmented sub-images and sends them to the multi-head attention module, to cause the multi-head attention module to obtain contextual image feature that interacts between different sub-images with each other, (wherein, the structural diagram of the TPA may be shown in Figure 3. Figure 3 is an exemplary embodiment of the present disclosure showing a schematic diagram of the working principle of a TPA module;) thereby obtaining a comprehensive and accurate description of the font recognition image through the contextual image feature, and then reduce the dimensionality of the second image feature through MLP (Multilayer Perceptron, multi-layer perceptron) to obtain the low-dimensional feature corresponding to each of the sub-images, for example, convert the 512-dimensional feature corresponding to a font recognition image into 64-dimensional data, that is, use a 64-dimensional vector to represent a font recognition image (i.e., for each font recognition image performs an embedding operation), thereby obtaining the second image feature of each of the font recognition image, and calculating each type of the representative feature of the recognizable font (that is, obtaining the mean value of the second image feature of each font recognition image in the training data set through the embedding space (embedded interval network)) according to the embedding result corresponding to font recognition image in each of the training data set (i.e. the second image feature of each of the font recognition image), and the mean value of the second image feature is used as representative feature of the corresponding font type of the training data set. Similarly, the representative feature corresponding to a plurality of font types may be obtained. After obtaining the representative feature corresponding to a plurality of font types, the image to be recognized may be obtained. Such that, after the image to be recognized goes through the backbone(back bone network),and the TPA module and the MLP module, the second image feature corresponding to the image to be recognized is obtained, and calculates the Euclidean distance between the representative feature corresponding to a plurality of font types and the second image feature corresponding to the image to be recognized in the sampler (sampling module), and determines the font type corresponding to the target text in the image to be recognized based on the Euclidean distance.

In addition, it should be noted that the above-described embodiment of determining the font type corresponding to the target text according to the second image feature may comprise the following steps S1 to S3:

S1, obtaining the Euclidean distance between the second image feature and the representative feature corresponding to each of a plurality of types of recognizable fonts corresponding to the predetermined font recognition model, to obtain a plurality of the Euclidean distance between the image to be recognized and the representative feature of a plurality of types of the recognizable fonts.

For example, if the predetermined font recognition model can recognize N fonts, then the predetermined font recognition model comprises representative features of each of the N fonts. For example, if the representative feature corresponding to font A is $[a_1\ a_2\ \cdots\ a_n]$, if the representative feature corresponding to font B is $[b_1\ b_2\ \cdots\ b_n]$, the second image feature corresponding to the current image to be recognized is $[x_1\ x_2\ \cdots\ x_n]$, then the Euclidean distance between the current image to be recognized and the representative features of the font A is $\sqrt{\sum_{i=1}^{n}(x_i - a_i)^2}$, and the current Euclidean distance between the image to be recognized and the representative features of the font B is $\sqrt{\sum_{i=1}^{n}(x_i - b_i)^2}$. In the same way, the Euclidean distance between the image to be recognized and each of the recognizable font in the predetermined font recognition model can be obtained, wherein, the predetermined font recognition model comprises representative feature of recognizable fonts.

S2, determine the minimum target distance from a plurality of Euclidean distances.

For example, if the predetermined font recognition model comprises representative features of six recognizable fonts, namely font A to font F, where the Euclidean distance between the second image feature of the image to be recognized and the representative feature of font A is less than the Euclidean distance between the image to be recognized and the representative feature of font B, font C, font D, font E, and font F respectively, that is, the Euclidean distance between the second image feature of the image to be recognized and the representative feature of font A is the target distance .

S3: Determine the font type corresponding to the target text in the image to be recognized according to the target distance.

In this step, a possible implementation is: in response to the target distance is less than the predetermined distance threshold, determine the target font type corresponding to the target representative feature used to calculate the target distance as the font type of the target text.

Still taking the steps shown in S2 above as an example, when the Euclidean distance between the second image feature of the image to be recognized and the representative feature of font A is the target distance, if the target distance is less than the predetermined distance threshold, then the font A is used as the font type corresponding to the target text in the image to be recognized.

In this step, in another possible implementation, in response to determining that the target distance is greater than or equal to the predetermined distance threshold, determines that the font type corresponding to the target text is a new font.

Still taking the steps shown in S2 above as an example, in response to the Euclidean distance between the second image feature of the image to be recognized and the representative feature of font A being the target distance, if the target distance is greater than or equal to the predetermined distance threshold, then determines that the font type corresponding to the target text in the image to be recognized is a new font, that is, the predetermined font recognition model is unable to recognize the specific font type corresponding to the target text in the image to be recognized.

The above technical solution inputs the image to be recognized into a predetermined font recognition model, to cause the predetermined font recognition model to output the font type corresponding to the target text; wherein, the predetermined font recognition model is used to divide the image to be recognized into a plurality of sub-images, and obtains the first image feature corresponding to each of the sub-images, and determines the second image feature corresponding to the image to be recognized according to the first image feature corresponding to each of the sub-images of the image to be recognized, and the second image feature comprise context association feature between each of the sub-images and other sub-image of the image to be recognized. The font type corresponding to the target text is determined according to the second image feature, and it is able to describe the image to be recognized more comprehensively and accurately according to the correlation between each character image and other sub-image, thereby improving the accuracy of the font recognition result and the font recognition rate.

Optionally, the predetermined font recognition model is also used to expand the recognized font types through the following steps shown in S4 to S6, as follows: S4: obtaining a plurality of first font recognition sample images of the target new font.

Wherein, the first font recognition sample image comprises a specified text sample of the target new font.

In this step, a possible implementation may comprise: obtaining the specified text sample of the target new font from the predetermined font corpus; obtaining the target background image from the predetermined background database; and synthesizing the specified text sample and the target background image into the first font identification sample image.

It should be noted that, since the characters in the specified text sample in the first font recognition sample image are all characters corresponding to the target new font obtained from the predetermined font corpus, the obtained specified text samples in the first font recognition sample image are all font types of new font types.

S5: Obtaining second image features corresponding to each first font recognition sample image.

In this step, the first font recognition sample image may be input into the image segmentation model, to cause the image segmentation module to divide the first font recognition sample image into multiple sub-images, and obtains the first image feature corresponding to each of the sub-images, and inputs the first image feature corresponding to each of the sub-images into the multi-head attention module, to cause the multi-head attention module to obtain the context association feature between each of the sub-images and other sub-image of the first font recognition sample image, thereby obtaining the second image feature corresponding to the first font recognition sample image.

S6: Obtaining the target mean value of a plurality of the second image feature corresponding to a plurality of the first font recognition sample image, using the target mean value as the target representative feature corresponding to the target new font, and storing the target representative feature.

For example, it is able to obtain the second image feature corresponding to each of the first font recognition sample image in the 50 first font recognition sample images, thereby obtaining 50 second image features, and use the mean value of the 50 second image features as the target representative feature corresponding to the new font.

The above technical solution is able to not only effectively avoid the problem of difficulty in obtaining training data during the training process of font recognition models in related technologies, but also able to realize the recognition of multi-category and multi-lingual font types without the need for real annotation data, and it is able to achieve rapid expansion for new font types that will appear in the future.

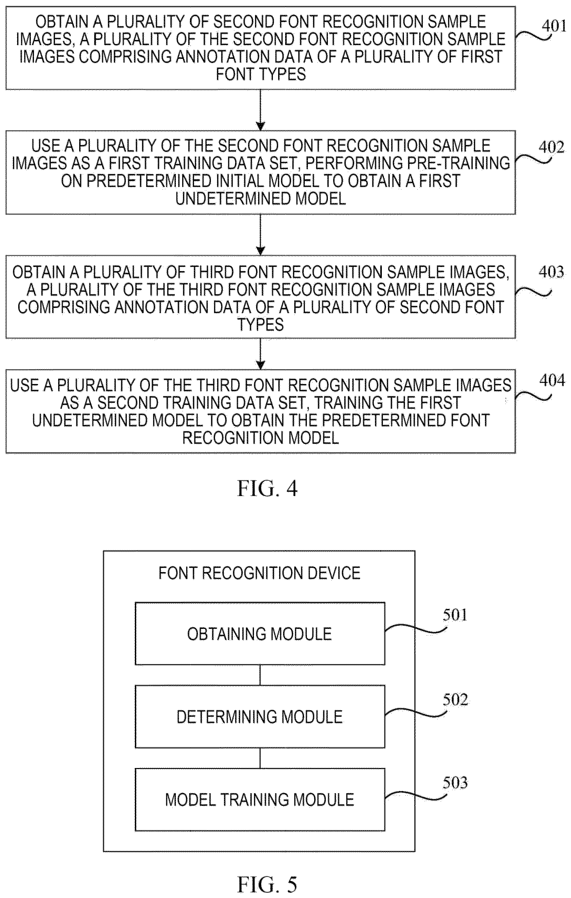

Figure 4 is a flow chart of a model training method illustrated by an exemplary embodiment of the present disclosure; as shown in Figure 4, the predetermined font recognition model may be trained in the following manner:

Step 401: Obtaining a plurality of second font recognition sample images, and a plurality of the second font recognition sample images comprise annotation data of a plurality of first font types.

In this step, the second font recognition sample image may be generated by: obtaining the character of the first font type from the predetermined font corpus; obtaining the specified background image from the predetermined background library; and synthesizing the character of the first font type and the designated background image into the second font recognition sample image. Wherein, the predetermined font corpus may be a simplified Chinese corpus, a traditional Chinese corpus, or an English font corpus.

Step 402: Using a plurality of the second font recognition sample images as a first training data set, and perform pre-training on the predetermined initial model to obtain the first undetermined model.

Wherein, the predetermined initial model may comprise an initial image segmentation module and an initial multi-head attention module.

In this step, a plurality of font category recognition tasks may be established, and models of a plurality of the font category recognition tasks may be trained using the first training data set to obtain the first undetermined model.

Step 403: Obtaining a plurality of third font recognition sample images, a plurality of the third font recognition sample images comprise annotation data of a plurality of second font types.

Wherein, the first font type is in consistent with or different from the second font type.

It should be noted that the third font recognition sample image may be generated by: obtaining the character of the second font type from the predetermined font corpus; obtaining the required background image from the predetermined background library; synthesizing the character of the second font type and the required background image into the third font recognition sample image. In this way, the difficulty of obtaining training data during the training process of the font recognition model may be effectively reduced.

Step 404: Use a plurality of the third font recognition sample images as a second training data set, and training the first undetermined model to obtain the predetermined font recognition model.

It should be noted that the above model training process can refer to the meta-learning process in the existing technology, that is, through the above steps 401 to 402 as the meta-training stage, a plurality of different classification tasks are constructed using synthetic data sets, and MAML (Model -Agnostic Meta-Learning) method to perform model training to obtain the first undetermined model, and then through the above steps 403 to 404 as the meta-testing stage, synthetic data is also used to construct a second training data set, and continues to train the first undetermined model based on the second training data set, which can effectively improve the convergence rate of the predetermined font recognition model and improving the training efficiency of the predetermined font recognition model.

In addition, it should be noted that the above model training process can be conducted offline or online. After obtaining the predetermined font recognition model, if a new font type appears, requiring the predetermined font recognition model to be equipped with the ability to handle the new font type. It is only required to obtain the representative characteristics of the new font type and store them into the predetermined font recognition model, such that the predetermined font recognition model is equipped with the capability to recognize the new font type.

The above technical solution is able to effectively avoid the problem of difficulty in obtaining training data during the training process of font recognition model in related technologies. It is able to realize the recognition of multi-category and multi-lingual font types without the need for real annotation data, and adopting the training mechanism of meta-learning, it is able to obtain a predetermined font recognition model that is able to be rapidly expanded for new font types that will appear in the future.

Figure 5 is a block diagram of a font recognition device illustrated by an exemplary embodiment of the present disclosure; as shown in Figure 5, the device may comprise:

an obtaining module 501, configured to obtain an image to be recognized, wherein the image to be recognized comprises target text;
a determining module 502, configured to input the image to be recognized into a predetermined font recognition model, to cause the predetermined font recognition model to output the font type corresponding to the target text;

Wherein, the predetermined font recognition model is used to divide the image to be recognized into a plurality of sub-images; obtain the first image feature corresponding to each of the sub-images; determine a second image feature corresponding to the image to be recognized according to the first image feature corresponding to each sub-image of the image to be recognized. The second image feature comprises context association feature between each of the sub-image and other sub-images of the image to be recognized; and determine the font type corresponding to the target text according the second image feature.

Determining the second image feature corresponding to the image to be recognized according to the first image feature corresponding to each of the sub-images of the image to be recognized, it is able to provide a more comprehensive and accurate description for the image to be recognized according to the correlation between each of the character images and other sub-images, therefore determining the font type corresponding to the target text according to the second image feature is able to effectively improve the accuracy of the font recognition result, and it is also able to effectively improve the font recognition rate.

Optionally, the predetermined font recognition model is used for:

obtaining the Euclidean distance between the second image feature and the representative feature corresponding to each of a plurality of types of the recognizable fonts corresponding to the predetermined font recognition model, to obtain a plurality of the Euclidean distance between the image to be recognized and the representative feature of a plurality of types of the recognizable fonts;
determining the minimum target distance from a plurality of the Euclidean distances;
determining the font type corresponding to the target text in the image to be recognized is determined according to the target distance.

Optionally, the predetermined font recognition model is used for:

in response to the target distance being less than the predetermined distance threshold, determining the target font type corresponding to the target representative feature used to calculate the target distance as the font type of the target text.

Optionally, the predetermined font recognition model is used for:

in response to determining that the target distance being greater than or equal to the predetermined distance threshold, determining that the font type corresponding to the target text is a new font.

Optionally, the predetermined font recognition model is also used to:

obtaining a plurality of first font recognition sample images of the target new font, wherein the first font recognition sample images comprise specified text sample of the target new font;
obtaining second image feature corresponding to each of the first font recognition sample images;
obtaining a target mean value of a plurality of second image features corresponding to a plurality of the first font recognition sample images, using the target mean value as a target representative feature corresponding to the target new font, and storing the target representative feature.

Optionally, the predetermined font recognition model is used for:

obtaining the specified text sample of the target new font from the predetermined font corpus;
obtaining the target background image from the predetermined background library;
synthesizing the specified text sample and the target background image into the first font recognition sample image.

Optionally, the device also comprises a model training module 503, configured to:

obtain a plurality of second font recognition sample images, the plurality of second font recognition sample images comprising annotation data of a plurality of first font types;
use a plurality of the second font recognition sample images as the first training data set, and pre-train the predetermined initial model to obtain the first undetermined model, the predetermined initial model comprising an initial image segmentation module and an initial multi-head attention module;
obtain a plurality of third font recognition sample images, the plurality of third font recognition sample images comprising annotation data of a plurality of second font types, the first font type being in consistent with or different from the second font type;
use a plurality of the third font recognition sample images as a second training data set, and train the first undetermined model to obtain the predetermined font recognition model.

The above technical solution can effectively avoid the problem of difficulty in obtaining training data during the training process of font recognition models in related technologies. It can realize the recognition of multi-category and multi-lingual font types without the need for real annotation data, and it adopts the training mechanism of meta-learning, being able to obtain a predetermined font recognition model that is able to be rapidly expanded for new font types that will appear in the future.

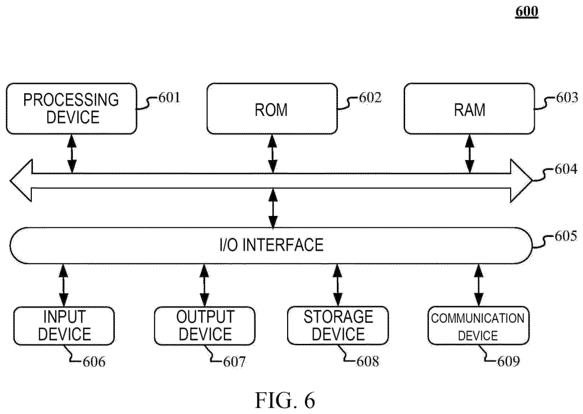

Referring now to FIG. 6, a schematic structural diagram of an electronic device 600 suitable for implementing embodiments of the present disclosure is shown. Terminal devices in embodiments of the present disclosure may comprise, but are not limited to mobile terminals such as mobile phone, notebook computer, digital broadcast receiver, PDA (personal digital assistant), PAD (tablet computer), PMP (portable multimedia player), vehicle-mounted terminal (such as vehicle-mounted navigation terminal) and fixed terminals such as digital TV, desktop computer, etc. The electronic device shown in FIG. 6 is only an example and should not impose any limitations on the functions and scope of use of the embodiments of the present disclosure.

As shown in FIG. 6, the electronic device 600 may comprise a processing device (e.g. central processing unit, graphics processor, etc.)601, which may execute various appropriate actions and processes according to a program stored in a read-only memory (ROM) 602 or a program loaded into a random access memory (RAM) 603 from a storage device608. In the RAM 603, various programs and data required for the operation of the electronic device 600 are also stored. The processing device 601, ROM 602 and RAM 603 are connected to each other via a bus 604. An input/output (I/O) interface 605 is also connected to bus 604.

Generally, the following devices may be connected to the I/O interface 605: an input device 606 comprising, for example, a touch screen, touch pad, keyboard, mouse, camera, microphone, accelerometer, gyroscope, etc.; an output device 607 comprising, for example, a liquid crystal display (LCD), speaker, vibrator ; a storage device 608 comprising a cassette, a hard disk, etc.; and a communication device 609. Communication device 609 may allow electronic device 600 to communicate wirelessly or wiredly with other device to exchange data. Although FIG. 6 illustrates electronic device 600 with various devices, it should be understood that implementation or availability of all illustrated devices is not required. More or fewer devices may alternatively be implemented or provided.

In particular, according to embodiments of the present disclosure, the processes described above with reference to the flowcharts may be implemented as computer software programs. For example, embodiments of the present disclosure comprise a computer program product including a computer program carried on a non-transitory computer-readable medium, the computer program containing program code for performing the method illustrated in the flowchart. In such embodiments, the computer program may be downloaded and installed from the network via the communication device 609, or installed from the storage device 608, or from the ROM 602. When the computer program is executed by the processing device 601, the above-mentioned functions defined in the method of embodiments of the present disclosure are performed.

It should be noted that the computer-readable medium mentioned above in the present disclosure may be a computer-readable signal medium or a computer-readable storage medium, or any combination of the above two. The computer-readable storage medium may be, for example, but not limited to, an electrical, magnetic, optical, electromagnetic, infrared, or semiconductor system, device or apparatus, or any combination thereof. More specific examples of computer readable storage media may comprise, but are not limited to: an electrical connection having one or more wires, a portable computer disk, a hard drive, random access memory (RAM), read only memory (ROM), erasable programmable read-only memory (EPROM or flash memory), optical fiber, portable compact disk read-only memory (CD-ROM), optical storage device, magnetic storage device, or any suitable combination of the above. In this disclosure, a computer-readable storage medium may be any tangible medium that contains or stores a program for use by or in connection with an instruction execution system, apparatus, or device. In the present disclosure, a computer-readable signal medium may comprise a data signal propagated in baseband or as part of a carrier wave, carrying computer-readable program code therein. Such propagated data signals may take many forms, comprising but not limited to electromagnetic signal, optical signal, or any suitable combination of the above. A computer-readable signal medium may also be any computer-readable medium other than a computer-readable storage medium that can send, propagate, or transmit a program for use by or in connection with an instruction execution system, apparatus, or device. Program code embodied on a computer-readable medium may be transmitted using any suitable medium, comprising but not limited to: wire, optical fiber cable, RF (radio frequency), etc., or any suitable combination of the foregoing.

In some embodiments, communication can be performed using any currently known or future developed network protocol, such as HTTP (HyperText Transfer Protocol), and may interconnect with digital data communication in any form or medium (e.g., communication network). Examples of communications networks comprise local area network ("LAN"), wide area network ("WAN"), the Internet (e.g., the Internet), and end-to-end network (e.g., ad hoc end-to-end networks), as well as any currently known or future developed network.

The above-mentioned computer-readable medium may be comprised in the above-mentioned electronic device; it may also exist independently without being assembled into the electronic device.

The computer-readable medium carries one or more programs. In response to the one or more programs being executed by the electronic device, causing the electronic device to: obtain the image to be recognized, and the image to be recognized comprises the target text; input the image to be recognized into a predetermined font recognition model, to cause the predetermined font recognition model to output the font type corresponding to the target text; wherein the predetermined font recognition model is used to divide the image to be recognized into a plurality of sub-images; obtain the first image feature corresponding to each of the sub-images; determine the second image feature corresponding to the image to be recognized according to the first image feature corresponding to each of the sub-images of the image to be recognized, the second image feature comprising context association feature between each of the sub-images and other sub-image of the image to be recognized; and determine the font type corresponding to the target text according to the second image feature.

Computer program code for performing the operations of the present disclosure may be written in one or more programming languages, comprising but not limited to object-oriented programming languages-such as Java, Smalltalk, C++, and further comprises conventional procedural programming languages - such as "C" or similar programming languages. The program code may execute entirely on the user's computer, partly on the user's computer, as a stand-alone software package, partly on the user's computer and partly on a remote computer or entirely on the remote computer or server. In situations involving remote computer, the remote computer may be connected to the user's computer through any kind of network, comprising a local area network (LAN) or a wide area network (WAN), or it may be connected to an external computer (such as through Internet connection with Internet service provider).

The flowchart and block diagrams in the accompanying drawings illustrate the architecture, functionality, and operation of system, method, and computer program product that may be implemented in accordance with various embodiments of the present disclosure. In this regard, each block in the flowchart or block diagram may represent a module, segment of a program, or a portion of code that contains one or more logic functions that implement the specified executable instructions. It should also be noted that, in some alternative implementations, the functions noted in the block may occur out of the order noted in the figures. For example, two blocks shown one after another may actually execute substantially in parallel, or they may sometimes execute in the reverse order, depending on the functionality involved. It will also be noted that each block of the block diagram and/or flowchart, and combinations of blocks in the block diagram and/or flowchart, may be implemented by special purpose hardware-based system that perform the specified function or operation, or may be implemented using a combination of specialized hardware and computer instruction.

The modules involved in the embodiments described in this disclosure may be implemented in software or hardware. The name of the module does not constitute a limitation on the module itself under certain circumstances. For example, the obtaining module can also be described as "obtaining the image to be recognized, and the image to be recognized comprises the target text."

The functions described above herein may be performed, at least in part, by one or more hardware logic components. For example, and without limitation, exemplary types of hardware logic components that may be used comprising: Field Programmable Gate Array (FPGA), Application Specific Integrated Circuits (ASIC), Application Specific Standard Product (ASSP), Systems on Chip (SOC), Complex Programmable Logical device (CPLD) and so on.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable media may comprise, but are not limited to, electronic, magnetic, optical, electromagnetic, infrared, or semiconductor systems, devices or apparatus, or any suitable combination of the foregoing. More specific examples of machine-readable storage media would comprise one or more wires based electrical connection, portable computer disk, hard drive, random access memory (RAM), read only memory (ROM), erasable programmable read only memory (EPROM or flash memory), optical fiber, portable compact disk read-only memory (CD-ROM), optical storage device, magnetic storage device, or any suitable combination of the above.

According to one or more embodiments of the present disclosure, example 1 provides a font recognition method, the method comprises:

obtaining an image to be recognized, the image to be recognized comprising target text;
inputting the image to be recognized into a predetermined font recognition model, to cause the predetermined font recognition model to output the font type corresponding to the target text;

Wherein, the predetermined font recognition model is used to: divide the image to be recognized into multiple sub-images and obtaining the first image feature corresponding to each of the sub-images; determine the second image feature corresponding to the image to be recognized according to the first image feature corresponding to each of the sub-images of the image to be recognized, the second image feature comprising context association feature between each of the sub-images and other sub-image of the image to be recognized; and determine the font type corresponding to the target text according to the second image feature.

According to one or more embodiments of the present disclosure, example 2 provides the method described in example 1, wherein determining the font type corresponding to the target text according to the second image feature comprises:

obtaining the Euclidean distance between the second image feature and the representative feature corresponding to each of a plurality of types of recognizable fonts corresponding to the predetermined font recognition model, to obtain a plurality of the Euclidean distance between the image to be recognized and the representative feature of a plurality of types of the recognizable fonts;
determining the minimum target distance from a plurality of the Euclidean distances;
determining the font type corresponding to the target text in the image to be recognized according to the target distance.

According to one or more embodiments of the present disclosure, example 3 provides the method described in example 2, wherein determining the font type corresponding to the target text in the image to be recognized according to the target distance comprises:
in response to the target distance being less than the predetermined distance threshold, determining the target font type corresponding to the target representative feature used to calculate the target distance as the font type of the target text.

According to one or more embodiments of the present disclosure, example 4 provides the method described in example 2, wherein determining the font type corresponding to the target text in the image to be recognized according to the target distance comprises:
in response to determining that the target distance being greater than or equal to the predetermined distance threshold, determining that the font type corresponding to the target text is a new font.

According to one or more embodiments of the present disclosure, example 5 provides the method of example 1, and the predetermined font recognition model is also used for:

obtaining a plurality of first font recognition sample images of the target new font, wherein the first font recognition sample images comprise specified text samples of the target new font;
obtaining the second image features corresponding to each of the first font recognition sample images;
obtaining the target mean value of the plurality of second image features corresponding to a plurality of the first font recognition sample images, using the target mean value as the target representative feature corresponding to the target new font, and stores the target representative feature.

According to one or more embodiments of the present disclosure, example 6 provides the method described in example 5, wherein obtaining a plurality of first font recognition sample images of the target new font, comprises:

obtaining specified text sample of the target new font from the predetermined font corpus;
obtaining the target background image from the predetermined background library;

Synthesizing the specified text sample and the target background image into the first font recognition sample image.

According to one or more embodiments of the present disclosure, example 7 provides the method described in any one of examples 1-6, and the predetermined font recognition model is trained in the following manner:

obtaining a plurality of second font recognition sample images, the plurality of second font recognition sample images comprising annotation data of a plurality of first font types;
using the plurality of second font recognition sample images as a first training data set, and pre-train a predetermined initial model to obtain a first undetermined model, the predetermined initial model comprising an initial image segmentation module and an initial multi-head attention module;
obtaining a plurality of third font recognition sample images, the plurality of third font recognition sample images comprising annotation data of a plurality of second font types, the first font type being in consistent with or different from the second font type;
using a plurality of the third font recognition sample images as a second training data set, training the first undetermined model to obtain the predetermined font recognition model.

According to one or more embodiments of the present disclosure, example 8 provides a font recognition device, the device comprising:

an obtaining module, configured to obtain an image to be recognized, where the image to be recognized comprises target text;
a determination module, configured to input the image to be recognized into a predetermined font recognition model, to cause the predetermined font recognition model to output the font type corresponding to the target text;

Wherein, the predetermined font recognition model is used to divide the image to be recognized into a plurality of sub-images and obtaining the first image feature corresponding to each of the sub-images; determine the second image feature corresponding to the image to be recognized according to the first image feature corresponding to each of the sub-images of the image to be recognized, the second image feature comprising context association feature between each of the sub-images and other sub-image of the image to be recognized; and determine the font type corresponding to the target text according to the second image feature.

According to one or more embodiments of the present disclosure, example 9 provides a computer-readable medium having a computer program stored thereon that, in response to being executed by a processing device, implements the steps of the method described in any one of examples 1-7 above.

According to one or more embodiments of the present disclosure, example 10 provides an electronic device, comprising:

a storage device having a computer program stored thereon;
a processing device, configured to execute the computer program in the storage device to implement the steps of the method described in any one of examples 1-7 above.

The above description is only a description of the preferred embodiments of the present disclosure and the technical principles used. Those skilled in the art should understand that the disclosure scope involved in the present disclosure is not limited to technical solutions composed of specific combinations of the above technical features, but should also cover solutions composed of the above technical features or without departing from the above disclosed concept. Other technical solutions formed by any combination of equivalent features. For example, a technical solution is formed by replacing the above features with technical features with similar functions disclosed in this disclosure (but not limited to).

Furthermore, although operations are depicted in a specific order, this should not be understood as requiring that these operations be performed in the specific order shown or performed in a sequential order. Under certain circumstances, multitasking and parallel processing may be advantageous. Likewise, although several specific implementation details are included in the above discussion, these should not be construed as limiting the scope of the present disclosure. Certain features described in the context of individual embodiments may also be implemented in combination in a single embodiment. Conversely, various features that are described in the context of a single embodiment can also be implemented in multiple embodiments individually or in any suitable sub-combination.

Although the present subject matter has been described in language specific to structural features and/or methodological logical acts, it should be understood that the subject matter defined in the accompanying CLAIMS is not necessarily limited to the specific features or acts described above. Rather, the specific features and actions described above are merely example forms of implementing CLAIMS. Regarding the devices in the above embodiments, the specific manner in which each module performs operations has been described in detail in the embodiments related to the method, and will not be elaborated here.

**Claims**

1. A font recognition method, wherein the method comprises:

    obtaining an image to be recognized, the image to be recognized comprising target text; inputting the image to be recognized into a predetermined font recognition model, to cause the predetermined font recognition model to output a font type corresponding to the target text; wherein, the predetermined font recognition model is used to: divide the image to be recognized into a plurality of sub-images; obtain a first image feature corresponding to each of the sub-images; determine a second image feature corresponding to the image to be recognized according to the first image feature corresponding to each of the sub-images of the image to be recognized, the second image feature comprising a context association feature between each of the sub-images and other sub-image of the image to be recognized; and determine a font type corresponding to the target text according to the second image feature.

2. The method of claim 1, wherein determining a font type corresponding to the target text according to the second image feature comprises:

    obtaining an Euclidean distance between the second image feature and a representative feature corresponding to each of a plurality of types of recognizable fonts corresponding to the predetermined font recognition model, to obtain a plurality of Euclidean distances between the image to be recognized and representative features of a plurality of types of the recognizable fonts; determining a minimum target distance from the plurality of Euclidean distances; determining a font type corresponding to the target text in the image to be recognized according to the target distance.

3. The method of claim 2, wherein determining a font type corresponding to the target text in the image to be recognized according to the target distance comprises:
    in response to the target distance being less than a predetermined distance threshold, determining a target font type corresponding to a target representative feature used to calculate the target distance as a font type of the target text.

4. The method of claim 2, wherein determining a font type corresponding to target text in the image to be recognized according to the target distance comprises:
    in response to determining that the target distance is greater than or equal to a predetermined distance threshold, determining a font type corresponding to the target text as a new font.

5. The method of claim 1, wherein the predetermined font recognition model is further used for:

    obtaining a plurality of first font recognition sample images of a target new font, the first font recognition sample image comprising a specified text sample of the target new font; obtaining a second image feature corresponding to each first font recognition sample image; obtaining a target mean value of the plurality of second image features corresponding to the plurality of first font recognition sample images, using the target mean value as a target representative feature corresponding to the target new font, and storing the target representative feature.

6. The method of claim 5, wherein obtaining a plurality of first font recognition sample images of the target new font comprises:

    obtaining a specified text sample of the target new font from a predetermined font corpus; obtaining a target background image from a predetermined background library; synthesizing the specified text sample and the target background image into the first font recognition sample image.

7. The method of any one of claims 1 to 6, wherein the predetermined font recognition model is trained through:

    obtaining a plurality of second font recognition sample images, the plurality of second font recognition sample images comprising annotation data of a plurality of first font types; using the plurality of second font recognition sample images as a first training data set, pre-training a predetermined initial model to obtain a first undetermined model, the predetermined initial model comprising an initial image segmentation module and an initial multi-head attention module;

obtaining a plurality of third font recognition sample images, the plurality of third font recognition sample images comprising annotation data of a plurality of second font types, the first font type being in consistent with or different from the second font type;

using the plurality of third font recognition sample images as a second training data set, training the first undetermined model to obtain the predetermined font recognition model.

8. A font recognition device, wherein the device comprises:

an obtaining module, configured to obtain an image to be recognized, the image to be recognized comprising target text;

a determination module, configured to input the image to be recognized into a predetermined font recognition model, to cause the predetermined font recognition model to output a font type corresponding to the target text;

wherein, the predetermined font recognition model is used to: divide the image to be recognized into a plurality of sub-images and obtaining a first image feature corresponding to each of the sub-images; determine a second image feature corresponding to the image to be recognized according to the first image feature corresponding to each of the sub-images of the image to be recognized, the second image feature comprising context association feature between each of the sub-images and other sub-image of the image to be recognized; and determine a font type corresponding to the target text according to the second image feature.

9. A computer-readable medium on which a computer program is stored, wherein in response to the program being executed by a processing device, implements the steps of the method described in any one of claims 1-7.

10. An electronic device, wherein the electronic device comprises:

a storage device, storing a computer program thereon;

a processing device, configured to execute the computer program in the storage device to implement steps of the method in any one of claims 1-7.

| OBTAIN AN IMAGE TO BE RECOGNIZED, THE IMAGE TO BE RECOGNIZED COMPRISING TARGET TEXT | 101 |

| INPUT THE IMAGE TO BE RECOGNIZED INTO A PREDETERMINED FONT RECOGNITION MODEL, TO CAUSE THE PREDETERMINED FONT RECOGNITION MODEL TO OUTPUT A FONT TYPE CORRESPONDING TO THE TARGET TEXT | 102 |

FIG. 1

Batch MODULE → Backbone (BACKBONE NETWORK) → TPA (TEMPORAL PYRAMID ATTENTION, ATTENTION MECHANISM) → MLP (MULTILAYER PERCEPTRON, MULTI-LAYER PERCEPTRON) → Embedding Space (EMBEDDED INTERVAL NETWORK) → Sampler (SAMPLING MODULE)

FIG. 2

Multi-Head Attention

FONT RECOGNITION IMAGE

FIG. 3

OBTAIN A PLURALITY OF SECOND FONT RECOGNITION SAMPLE IMAGES, A PLURALITY OF THE SECOND FONT RECOGNITION SAMPLE IMAGES COMPRISING ANNOTATION DATA OF A PLURALITY OF FIRST FONT TYPES ⁓401

USE A PLURALITY OF THE SECOND FONT RECOGNITION SAMPLE IMAGES AS A FIRST TRAINING DATA SET, PERFORMING PRE-TRAINING ON PREDETERMINED INITIAL MODEL TO OBTAIN A FIRST UNDETERMINED MODEL ⁓402

OBTAIN A PLURALITY OF THIRD FONT RECOGNITION SAMPLE IMAGES, A PLURALITY OF THE THIRD FONT RECOGNITION SAMPLE IMAGES COMPRISING ANNOTATION DATA OF A PLURALITY OF SECOND FONT TYPES ⁓403

USE A PLURALITY OF THE THIRD FONT RECOGNITION SAMPLE IMAGES AS A SECOND TRAINING DATA SET, TRAINING THE FIRST UNDETERMINED MODEL TO OBTAIN THE PREDETERMINED FONT RECOGNITION MODEL ⁓404

FIG. 4

FONT RECOGNITION DEVICE

OBTAINING MODULE ⁓501

DETERMINING MODULE ⁓502

MODEL TRAINING MODULE ⁓503

FIG. 5

**600**

FIG. 6

## INTERNATIONAL SEARCH REPORT

| International application No. |
|---|
| **PCT/CN2022/138914** |

**A. CLASSIFICATION OF SUBJECT MATTER**

G06V20/62(2022.01)i

According to International Patent Classification (IPC) or to both national classification and IPC

**B. FIELDS SEARCHED**

Minimum documentation searched (classification system followed by classification symbols)

IPC: G06V, G06K

Documentation searched other than minimum documentation to the extent that such documents are included in the fields searched

Electronic data base consulted during the international search (name of data base and, where practicable, search terms used)

DWPI, VEN, CNTXT, CNKI, IEEE: 字体, 识别, 特征, 关联关系, 上下文, 多层感知, 自注意力, 主干网络, 模型, 网格, 划分, 分块, 子图像, 分区; font, recogni+, feature, character+, association, context, multi-layer perception, MLP, TPA, backbone, self-attention, multi-head attention, model, mesh, divi+, sub-image, partition

**C. DOCUMENTS CONSIDERED TO BE RELEVANT**

| Category* | Citation of document, with indication, where appropriate, of the relevant passages | Relevant to claim No. |
|---|---|---|
| PX | CN 114495080 A (BEIJING YOUZHUJU NETWORK TECHNOLOGY CO., LTD.) 13 May 2022 (2022-05-13) claims 1-10 | 1-10 |
| Y | CN 113111871 A (BEIJING KINGSOFT DIGITAL ENTERTAINMENT CO., LTD. et al.) 13 July 2021 (2021-07-13) claims 1-32, and description, paragraphs [0044]-[0064] and [0157]-[0228], and figures 1-12 | 1-6, 8-10 |
| Y | CN 113128442 A (SOUTH CHINA NORMAL UNIVERSITY) 16 July 2021 (2021-07-16) claims 1-10, and description, paragraphs [0010]-[0064], and figures 1-8 | 1-6, 8-10 |
| A | CN 109978078 A (XIAMEN YUANYIN INFORMATION TECHNOLOGY CO., LTD.) 05 July 2019 (2019-07-05) entire document | 1-10 |
| A | CN 113591831 A (SOUTHWEST UNIVERSITY) 02 November 2021 (2021-11-02) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2023** | **21 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/138914** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2021326655 A1 (HUAWEI TECHNOLOGIES CO., LTD.) 21 October 2021 (2021-10-21) entire document | 1-10 |

Form PCT/ISA/210 (second sheet) (July 2022)

## INTERNATIONAL SEARCH REPORT
### Information on patent family members

| International application No. |
| --- |
| **PCT/CN2022/138914** |

| Patent document cited in search report | | | Publication date (day/month/year) | Patent family member(s) | | | Publication date (day/month/year) |
| --- | --- | --- | --- | --- | --- | --- | --- |
| CN | 114495080 | A | 13 May 2022 | None | | | |
| CN | 113111871 | A | 13 July 2021 | None | | | |
| CN | 113128442 | A | 16 July 2021 | None | | | |
| CN | 109978078 | A | 05 July 2019 | None | | | |
| CN | 113591831 | A | 02 November 2021 | None | | | |
| US | 2021326655 | A1 | 21 October 2021 | EP | 3879450 | A1 | 15 September 2021 |
| | | | | WO | 2020133442 | A1 | 02 July 2020 |
| | | | | CN | 112041851 | A | 04 December 2020 |

Form PCT/ISA/210 (patent family annex) (July 2022)

**REFERENCES CITED IN THE DESCRIPTION**

**Patent documents cited in the description**

- CN 202210023481